Europäisches Patentamt

European Patent Office

Office européen des brevets

(19)

Publication number: **0 296 598**
**A1**

# EUROPEAN PATENT APPLICATION

(21) Application number: 88110045.7

(51) Int. Cl.⁴: **B63H 1/28**

(22) Date of filing: 23.06.88

(30) Priority: 24.06.87 JP 155414/87

(43) Date of publication of application:
**28.12.88 Bulletin 88/52**

(84) Designated Contracting States:
**AT BE CH DE ES GB GR IT LI LU NL SE**

(71) Applicant: Ishikawajima-Harima Heavy
Industries Co., Ltd.
**1-go, 2-ban, 2-chome, Ohtemachi Chiyoda-ku
Tokyo(JP)**

(72) Inventor: Imashimizu, Yoshinori
**2-7-16, Yakiyama-Honjoh
Kure-shi Hiroshima(JP)**
Inventor: Sato, Ryuichi
**Kurakigaoka-Jutaku 2-221 6-28-2, Mori
Isogo-ku Yokohama-shi Kanagawa(JP)**
Inventor: Akiyama, Hiroyuki Isogo-Daiichi-Ryo
**1-6-6, Shiomidai Isogo-ku
Yokohama-shi Kanagawa(JP)**
Inventor: Mori, Takao
**5-3-7, Sekimae
Musashino-shi Tokyo(JP)**
Inventor: Fujino, Ryosuke
**3-4-1, Gontazaka Hodogaya-ku
Yokohama-shi Kanagawa(JP)**

(74) Representative: Schaumburg, Thoenes &
Englaender
**Mauerkircherstrasse 31 Postfach 86 07 48
D-8000 München 80(DE)**

(54) Propulsion auxiliary device.

(57) The auxiliary propeller (5) is supported by the
rudder horn (4) behind and independently of the
main propeller (2), and the same (5) is attached to
the rudder horn (4) from the direction of the forward
side (B), that is to say in the direction of the back-
ward water stream (F) produced by the main propel-
ler (2), the main propeller shaft does not sustain any
weight of the auxiliary propeller (5), the oil line (12)
is not formed inside the main propeller (2), and even
if the auxiliary propeller (5) sticks to the rudder horn
(4), it will not affect the main propeller (2) and the
main propulsion system. overall.

FIG. 1

# PROPULSION AUXILIARY DEVICE

The present invention relates to a propulsion auxiliary device which is rotated by backward water stream produced by a proplusion main device such as a screw propeller so that it may generate auxiliary propulsive power, and more particularly it is concerned with such an auxiliary device whose installation is ameliorated.

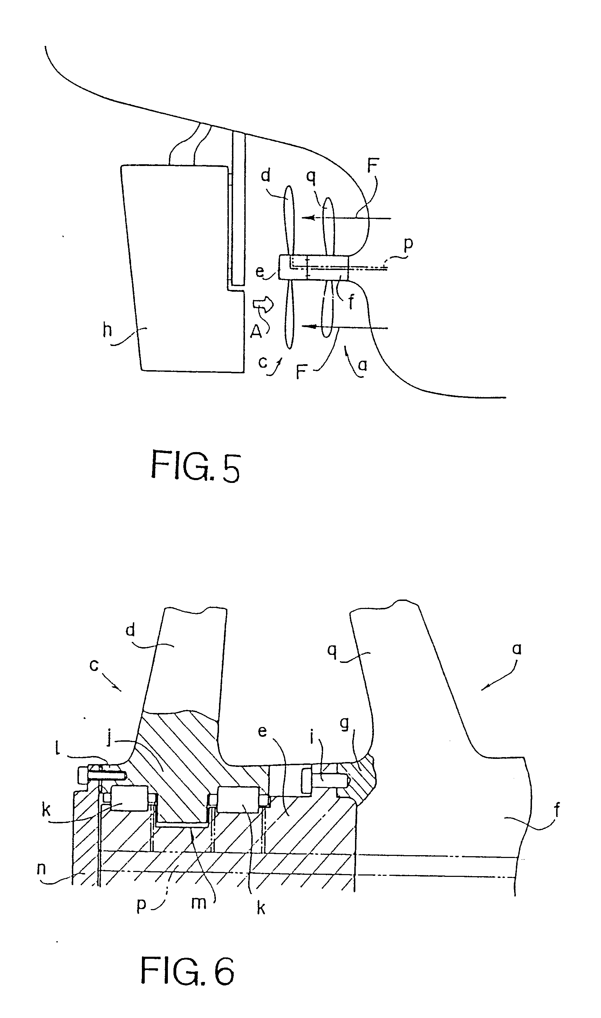

At the stern of a ship, as illustrated in Figure 5 of the accompanying drawings, a propulsion auxiliary device, namely an auxiliary propeller of conventional type c is provided behind (left hand in the accompanying drawings) and level with a propulsion main device, that is to say a screw propeller a, and it rotates upon backward water stream F created by the main propeller a, so that the auxiliary propeller c produces an auxiliary propulsive power relative to the propulsive power of the main propeller a. The auxiliary propeller c has several blades d. That part of each blade which is exposed to said water stream F is shaped like a turbine blade which the other part thereof outwardly in the radial direction is shaped with a normal propeller pitch, so that the former part is rotated by the afterward water stream F and the latter part produces an auxiliary propulsion power.

The installation of the auxiliary propeller c will be explained with Figures 5 and 6. A stub shaft e, which is a shaft of the auxiliary propeller c, is attached by bolts i from the side of rudder plate h (as indicated by an arrow A) to the rear end g of a boss f of the main screw a on the same axis thereof so that is extends in the direction the backward water stream F flows. Blades d of the auxiliary propeller c extend from a boss j, and the boss j is rotatably supported by bearing members k around the stub shaft e. Space for said bearing members k and for lubrication m is formed between the stub shaft e and the boss j. An end cover n is attached to the rear end l of the boss j of the auxiliary propeller c so as to seal said space m. Lubrication line p extends to the space m through a propeller shaft (not shown), the boss j and the stub shaft e, so that lubrication oil may be supplied therethrough.

The auxiliary propeller c of this type, however, has following difficulties.

(1) The auxiliary propeller c which includes the stub shaft e, the boss j, and the blades d is attached to the boss f of the propulsion device. It means that the entire weight thereof is supported by the propeller shaft via the screw propeller a like a cantilever. Therefore, the stern tube bearings which support the propeller shaft likely suffers ununiform loading, which may lead to an accident such as burning. And, in order to sustain a large momentum due to the auxiliary propeller c, the propeller shaft and the peripheral members thereof have to be high in stiffness, which is costly.

(2) The boss j of the auxiliary propeller c is attached to the screw propeller or a main propeller a, and supported by the stub shaft e, which is rotated with the screw propeller a, via the bearing members k. Hence, if the bearing members k are sticked around the shaft, the propeller c will rotate with the screw propeller a. This exerts an unduly large torque on the auxiliary propeller c as well as the main propeller a, so that the blades d and q of the two propellers c and a will be damaged.

(3) Since the auxiliary propeller c is attached to the main propeller a, the lubrication line p connected to the space m has to be made within the propeller shaft of the main propeller a. This makes the structure of the propeller shaft and the peripheral members thereof complicated, and the stiffness of the propeller shaft is deteriorated.

(4) The auxiliary propeller c has to be disposed at the rear of the main propeller a, and therefore it has to be atttached thereto from the side of the rudder plate h, or from the counter direction against the backward water stream F (as indicated by an arrow A in Figure 5). Accordingly, if the bolts i break, the auxiliary propeller c easily comes off from the boss f by fluid force of the water stream F.

An object of this invention is to provide a propulsion auxiliary device whose weight is not supported by the propeller shaft of the propuslion main device.

Another object of this invention is to provide a propulsion auxiliary device which does not rotate with the propeller shaft of the propulsion main device.

Still another object is to provide a propulsion auxiliary device whose lubrication system is simple in structure.

Yet another object is to provide an auxiliary propeller which can minimize the possibility of falling of the propulsion auxiliary device due to the fluid force of the backward water stream.

In order to attain the above four objects, the propulsion auxiliary device of this invention is supported by a rudder horn. More specifically, the propulsion auxiliary device which is rotated by the after-the-main-propeller water stream so as to produce the propulsion power is supported by the rudder horn positioned behind the main propeller, so that the propeller shaft of the propulsion main device does not bear any weight of the propulsion auxiliary device, the power transmission from the propeller shaft does not occur, the installation of the propulsion auxiliary device is improved with regard to the afterward water stream, and the construction of the lubrication line is simplified without affecting the functions of the propulsion auxiliary device.

The invention will be further described with reference to the accompanying drawings.

Figure 1 is a side view, showing a preferred embodiment of this invention.

Figure 2 is an enlarged sectional view of Figure 1, showing an essential part thereof.

Figure 3 is a side view, showing another embodiment of this invention.

Figure 4 is an enlarged sectional view of Figure 3, showing an essential part thereof.

Figure 5 is a side view, showing a related art.

Figure 6 is an enlarged sectional view of Figure 5, showing an essential part thereof.

Preferred embodiments will be described with the accompanying drawings.

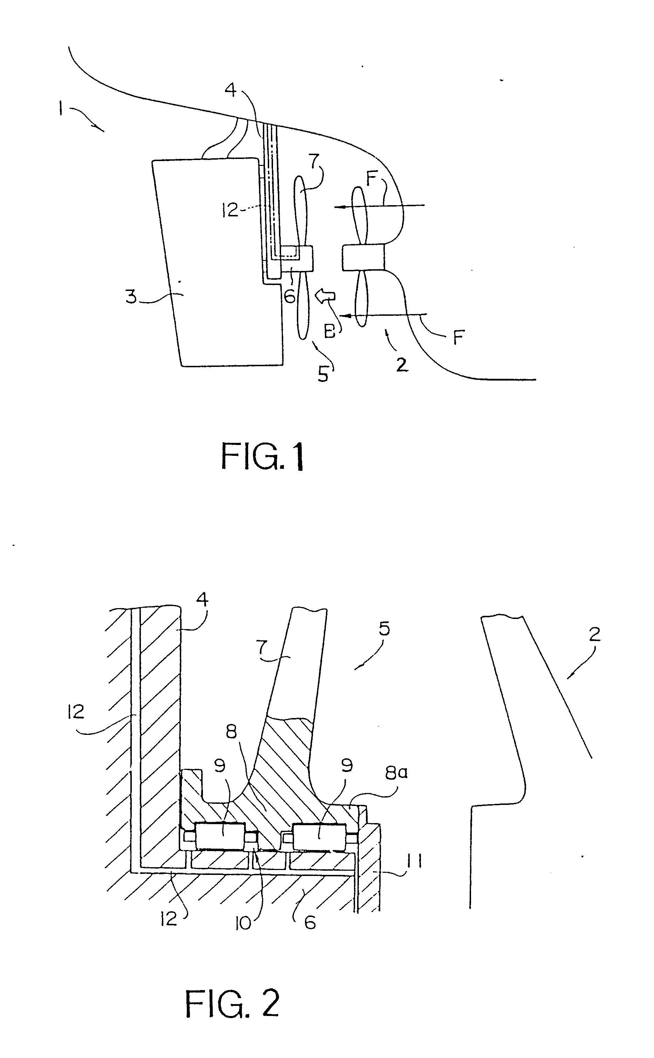

At the stern 1, as depicted in Figure 1 of the accompanying drawings, there are diposed a screw propeller 2, and a rudder plate 3 behind the propeller 2 where backward water stream F is produced. The ship turns when the rudder plate 3 deflects the backward water stream F. The rudder plate 3 extends vertically downward and is rotatably supported by a rudder horn 4. In this illustrated embodiment, the bottom end of the rudder horn 4 reaches the vicinity of the propulsion main device 2. An auxiliary propeller 5 is supported by the rudder horn 4, so that it is rotated by the backward water stream F and produces auxiliary propulsive power. The auxiliary propeller 5 has a structure similar to that described in "Background Art" of this specification and it maily comprises, as shown in Figures 1 and 2, a stub shaft 6, a boss 8 fitted around the stub shaft 6 and having blades 7 extending therefrom, and bearing members 9 to support the boss 8 rotatably about the stub shaft 6. The stub shaft 6 is level with the screw propeller 2, and is fixed to the rudder horn 4 spacedly behind the propeller 2. In this embodiment, the stub shaft 6 is integrally disposed to the rudder horn 4. However, it is satisfactory to attach the shaft 6 to the rudder horn 4 by bolts or the like from the front side thereof (as indicated by the arrow B). Around the stub shaft 6 fixed to the rudder horn 4, there are engaged bearing members 9, and around these bearing members there are engaged a sleeve-like boss or a hub 8, so that the blades 7 can rotates about the stub shaft 6. A head cover 11 is attached to the front end 8a of the boss 8 so as to seal space 10 for accomodating the bearing members 9 and lubrication oil between the stub shaft 6 and the boss 8. To the space 10 there is connected an oil course 12 formed in the rudder horn 4 and the stub shaft 6.

Since the idle propeller 5 is supported by the rudder horn 4 behind (left hand in the drawings) the screw propeller 2, the propeller shaft does not sustain any weight of the idle propeller 5. Thus, burning of the stern tube bearing will not occur. And, no special care is required with regard to stiffness.

The auxiliary propeller 5 is supported by the fixed rudder horn 4, not by the rotative propulsion device 2, so that even if bearing members 9 are sticked around the shaft 6, only the idle rotation of the auxiliary propeller 5 will be prevented, but this does not affect the propulsive device 2. Therefore, a safety sailing is ensured.

The lubrication line 12 is bored within the rudder horn 4 which serves as a mere support member for the propeller 5. Hence, compared with the lubrication line of the related art discribed in "Background Art" of this specification, which is bored within the rotative propeller shaft, the propeller shaft has a large stiffness, a simple construction, and a high reliability.

The auxiliary propeller 5 is installed to the rudder horn 4 from the side of the main propeller 2, or in the direction the backward water stream F flows (as indicated by the arrow B in Figure 1) because of positions of the main propeller 2 and the stern plate 3. The direction B is the direction the fluid power of the water stream F works in so that falling of the auxiliary propeller 5 due to said water stream F will be prevented.

The distance between the main propeller 2 and the auxiliary propeller 5 is relatively large, but it does not affect the latter 5. Since the backward water strea F is reduced as it flows, the auxiliary propeller 5 can be desinged smaller in diameter, which is considered as an advantage.

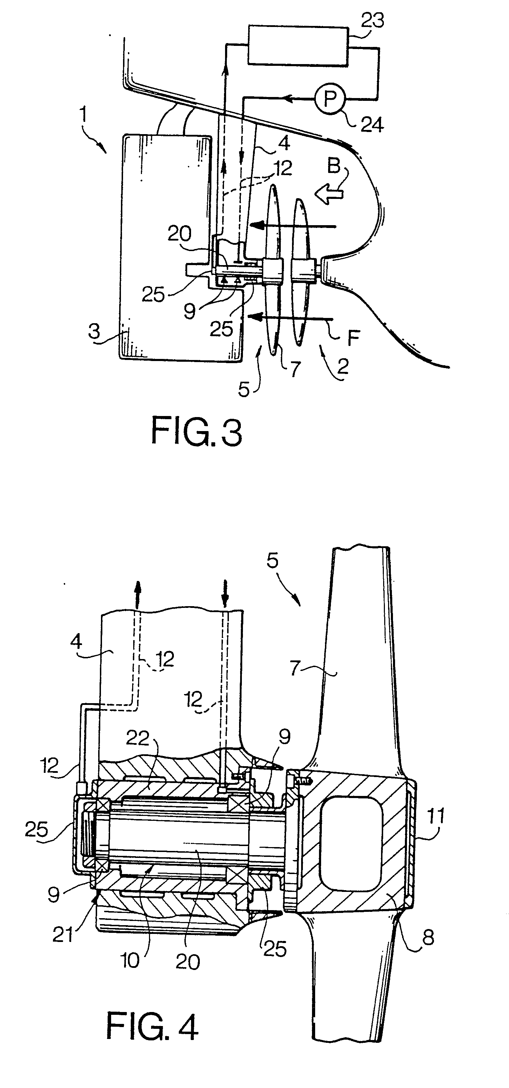

Referring now to Figures 3 and 4, there is illustrated another embodiment of the present invention. In this embodiment, instead of the stub shaft 6, which is a shaft of the auxiliary propeller 5 and is fixed to the rudder horn 4, another shaft 20 is employed. The shaft 20 rotates with the blades 7 and is rotatably supported by the rudder horn 4. It is also joined to the boss 8. A pair of bearing members 9 are disposed at the both ends of sleeve 22 fitted in a bore 21 formed in the rudder horn 4 so as to rotatably support the shaft 20. To the bearing members 9 there is connected a lubrication line 12 formed in the rudder horn 4. The lubrication oil is supplied into said line 12 from a tank 23 by a pump 24 disposed independently of other members.

At the front and rear ends of the sleeve 22 through which the rotative shaft 20 lies, there are provided seal members 25 to oil-tightly seal the space 10. This embodiment has the same advantages as explained in the foregoing embodiment.

## Claims

1. A propulsion auxiliary device (5) comprising propeller blades (7), a boss (8) from which the propeller blades (7) extend, bearing members (9) for the boss (8) with the bearing members (9) fitting around the boss (8), an oil line (12) for lubrication to the boss (8), and a shaft (6; 20), wherein the propulsion auxiliary device (5) is disposed behind and level with a propulsion main device (2) so that the former (5) may be driven by backward water stream produced by the latter (2), and a rudder horn (4) supports a rudder plate (3) behind the propulsion auxiliary device (5), **characterized** in that the propulsion auxiliary device (5) is supported by the rudder horn (4) behind the propulsion main device (2).

2. A propulsion auxiliary device (5) of claim 1, **characterized** in that it (5) is supported by a rudder horn (4) so that it may be disposed at the stern (1) and be level with a propulsion main device (2), said rudder horn (4) rotatably supporting the rudder plate (3) located in said water stream (F) of the propulsion main device (2).

3. A propulsion auxiliary device (5) of claim 1 or 2, **characterized** in that it comprises propeller blades (7); a stub shaft (6) being level to the propulsion main device (2), and fixed to the rudder horn (4) spacedly behind the propulsion main device (2); a sleeve-shaped boss (8) supported by the stub shaft (6) so as to support the propeller blades (7); and ring- shaped bearing members (9) for supporting the boss (8) rotatably around the stub shaft (6).

4. A propulsion auxiliary device (5) of claim 3, **characterized** in that said stub shaft (6) is integrated with the rudder horn (4).

5. A propulsion auxiliary device (5) of claim 3, **characterized** in that said stub shaft (6) is attached and fixed to the rudder horn (4).

6. A propulsion auxiliary device (5) of claim 1 or 2 **characterized** in that it comprises propeller blades (7); a rotative shaft (20) being provided to the rudder horn (4) spacedly behind the propulsion main device (2) so that it may be level with the propulsion main device (2); a sleeve (22) fitted in a bore (21) formed within the rudder horn (4) so as to support the rotative shaft (20); a pair of bearing members (9) for rotatably supporting in the sleeve (22) the rotative shaft (20) at two portions of the shaft (20) spaced in the axial direction of the shaft (20); and a boss (8) engaged with the rotative shaft (20) with the propeller blades (7) extending therefrom.

7. A propulsion auxiliary device (5) of any one of the foregoing claims, **characterized** in that the lubricating line (12) for supplying lubricating oil into said propulsion auxiliary device (5) is disposed in said rudder horn (4).

8. A propulsion auxiliary device (5) of claim 7, **characterized** in that said lubrication line (12) extends through the rudder horn (4) and the stub shaft (6) so that the lubricating oil may be forced from an oil tank (23) to the propulsion auxiliary device (5).

9. A propulsion auxiliary device (5) of claim 7, **characterized** in that said lubrication line (12) extends through the rudder horn (4) and the sleeve (22) so that the lubricating oil may be forced from an oil tank (23) to the propulsion auxiliary device (5).

10. A propulsion auxiliary device (5) **characterized** in that it comprises: propeller blades (7); a stub shaft (6) being level with the propulsion main device (2), and fixed to the rudder horn (4) spacedly behind the propulsion main device (2); a sleeve-shaped boss (8) engaged with the stub shaft (6), the propeller blades (7) extending from the boss (8); and ring-shaped bearing members (9) for supporting the boss (8) rotatably around the stub shaft (6); the propulsion auxiliary device (2) being supported by a rudder horn (4) so that it may be rotated by the backward water stream (F) produced by the propulsion main device (2) so as to produce propulsive power, the rudder horn (4) being disposed at the stern (1) behind the propulsion main device (2) and extending downward with its bottom being level with the propulsion main device (2), so as to swingably support a rudder plate (3) located in said backward water stream (F) of the propulsion main device (2), lubrication line (12) being formed in said rudder horn (4) so as to supply lubricating oil to said propulsion auxiliary device (5).

11. A propulsion auxiliary device (5) **character ized** in that it comprises: propeller blades (7); a rotative shaft (20) disposed to the rudder horn (4) so that it may be level to the propulsion main device (2), and be spacedly behind the propulsion main device (2); a sleeve (22) fitted in a bore (21) formed within the rudder horn (4) so as to support the rotative shaft (20); a pair of bearing members (9) provided in the sleeve (22) so as to rotatably support the rotative shaft (20) at two portions of the rotative shaft (20) spaced in the axial direction of the shaft (20); and a boss (8), from which the propeller blades (7) extend, engaged with the rotative shaft (20), the propulsion auxiliary device (5) being supported by a rudder horn (4) so that it may be rotated by the backward water stream (F) of the propulsion main device (2) so as to produce propulsive power, the rudder horn (4) being disposed at the stern (1) behind the propulsion main device (2), and extending downward with its bottom being level with the propulsion main device (2), so as to swingably support a rudder plate (3) located in the backward water stream (F) of the propulsion main device (2), lubrication line (12) being formed in said rudder horn (4) so as to supply lubricating oil to said propulsion auxiliary device (5).

FIG. 1

FIG. 2

EP 0 296 598 A1

FIG. 3

FIG. 4

FIG. 5

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-1 756 889 (GRIM)<br>* Figure 3; pages 7-11 *<br>--- | 1-11 | B 63 H    1/28 |
| A | SHIPBUILDING & MARINE ENGINEERING INTERNATIONAL, vol. 107, no. 1278, May 1984, pages 163,164, London, GB; "Grim's vane wheel",<br>* Particularly figure at top of page 164; centre column, page 163 *<br>--- | 3-5,10 | |
| A | US-A-4 236 872 (METCALF)<br>* Figure 1; column 3, lines 4-14 *<br>--- | 6,11 | |
| A | NAVEL ENGINEERS JOURNAL, vol. 80, no. 6, December 1968, pages 932-934; "Shafting for contra-rotating propellers",<br>* Figures 2,4,5 *<br>----- | 7-9 | |

TECHNICAL FIELDS SEARCHED (Int. Cl.4)

B 63 H
B 63 J
F 16 C

The present search report has been drawn up for all claims

| Place of search | Date of completion of the search | Examiner |
|---|---|---|
| THE HAGUE | 27-09-1988 | HUNT A.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)